# EUROPEAN PATENT SPECIFICATION

(11) **EP 3 139 757 B1**
(45) Date of publication and mention of the grant of the patent: **06.06.2018**
(21) Application number: 15714485.8
(22) Date of filing: 01.04.2015
(51) Int. Cl.: A23D 9/007, A23D 9/02, C11B 1/02, C11B 1/10, A23L 33/10, A23D 9/06, C11B 1/04

(54) **PROCESS FOR TREATING SHEA NUTS AND SHEA BUTTER OBTAINED**
VERFAHREN ZUR BEHANDLUNG VON SHEA-NÜSSEN UND GEWONNENE SHEA-BUTTER
PROCÉDÉ DE TRAITEMENT DE NOIX DE KARITÉ ET BEURRE DE KARITÉ OBTENU

(30) Priority: 02.04.2014 GB 201405929
(43) Date of publication of application: 15.03.2017
(73) Proprietor: Loders Croklaan B.V., 1521 AZ Wormerveer (NL)
(72) Inventor: BREEDVELD, Jan Johannes Theodorus, 1521 AZ Wormerveer (NL); TURPIN, Antoine Philippe Frederic, 1521 AZ Wormerveer (NL)
(74) Representative: Potter Clarkson LLP
(86) International application number: PCT/EP2015/057260
(87) International publication number: WO 2015/150494

(56) References cited:
- WO-A1-2014/012548
- GB-A- 328 734
- GB-A- 1 509 664
- US-A- 4 229 483

## Description

The present invention relates to a process for treating shea nuts, to shea butter obtainable by such a process and to the use of the shea butter in food products, cosmetics and/or pharmaceuticals.

Shea nuts are obtained from the shea tree, which is endemic to the savannah of West Africa. The nut consists of a kernel surrounded by a shell. The nut is further surrounded by pulp (forming the shea fruit), which must be removed in order to obtain the shea nut.

Shea butter is an oil extract of the shea nut. Shea butter is a triglyceride that primarily contains palmitic, stearic, oleic, linoleic and arachidic acids, mainly stearic and oleic acids. Shea oil is used extensively in the food industry. For example, shea stearin is used as an ingredient in certain confectionery products. Shea butter is also used in a wide range of cosmetic applications, such as moisturisers, salves, and lotions.

Shea nuts usually germinate within a few days of dropping from the shea tree. After germination, enzymes begin to hydrolyse the triglycerides of the shea butter into their constituent fatty acids. An increase in the level of free fatty acids (FFAs) in the butter is undesirable as the quality and shelf life of the butter is decreased. A higher level of FFAs also means that increased fractionation is required to obtain the same quantity of shea butter. Furthermore, shea butter is often chemically refined using an alkali in order to remove FFAs from the butter. Therefore, a higher level of FFAs results in an increase in the amount of alkali needed and potential hydrolysis of the butter.

Obibuzor, et al., Journal of Cereals and Oilseeds, 2013, 4(2), 26-31 describes the effect of processing germinated shea kernels on the quality parameters of shea butter.

GB 328,734 describes a process for producing oil from oilseeds
such as palm fruit in a closed stationary vessel at a temperature
above 100°C, wherein free fatty acids are driven off with steam.

In West Africa, the processing of shea nuts after collection is typically done *via* traditional methods, such as cooking in water, direct roasting of the nuts or storing the nuts in the ground. Of these methods, cooking in water is preferred since both the direct roasting of the nuts and the storing of the nuts in the ground result in shea butter with a higher level of FFAs.

For traditional methods, both the collection and the boiling of the shea nuts in water are extremely work intensive. Therefore, not all available fresh shea nuts can be collected and processed. Approximately a quarter of the nuts collected are actually processed by the traditional method of boiling the shea nuts in water in a pan over a wood fire. The use of a wood fire for the treatment means that it is not a sustainable process. Understandably, the traditional boiling method is very limited in quantity and the shea nuts are processed consecutively in small batches (a typical batch size is 5 to 20 kg of nuts). This results in not all of the collected nuts being cooked on the same day. The untreated nuts will typically be left in the bags that they were collected in, increasing the chances that the nuts will degrade, increase in FFAs and produce lower quality shea butter. A significant proportion of the nuts may not be usable at all.

In addition to the degradation of the shea nuts after collection, the FFA content of the nuts also increases as the season (typically beginning in or around September) progresses.

There is therefore a need for a method for processing shea nuts in order to improve the quality of shea butter. In particular, there is a need for a process that can produce good quality shea butter in a high yield, with a low level of FFAs, and that can be carried out on a large scale. Such a process could result in increased economic growth in the countries of collection, as a greater number of nuts could be collected and an increased proportion of them may be treated and converted to shea butter.

According to the present invention, there is provided a process for treating shea nuts which comprises heating shea nuts to a temperature greater than 100 °C at a pressure greater than atmospheric pressure.

The process of the invention allows large quantities of shea nuts to be treated at one time, and then for high quality shea butter to be produced in a high yield.

Also described herein is shea butter obtainable or obtained by a process of the invention.

Further described herein is shea butter comprising less than 5% by weight free fatty acids (FFAs) and which is present in a container in a quantity of greater than 100 kg and which is obtained or obtainable by a process of the invention.

Further described herein is shea butter comprising less than 0.5% by weight free fatty acids (FFAs) obtainable or obtained by a process of the invention.

Also described herein is the use of shea butter obtainable or obtained by a process of the present invention in food products, pharmaceuticals and/or cosmetics, preferably a food product.

It has surprisingly been found that heating shea nuts with attached pulp to a temperature greater than 100 °C and a pressure greater than atmospheric pressure is highly effective in reducing the hydrolysis of triglycerides into FFAs in shea butter obtained from the shea nuts. The process of the invention sterilises the shea nuts and may reduce enzymatic hydrolysis, such as may occur *via* microbial or autocatalytic pathways.

Preferably the shea nuts comprise pulp. The term 'comprise pulp' means that all or some of the pulp of the shea fruit may be fully, or partially, attached to the shea nut.

Preferably, the process comprises at least two steps of increasing the pressure to greater than atmospheric pressure followed by decreasing the pressure. Typically, the pressure in the first step may be lower than the pressure in the subsequent second step.

Preferably, the pressure and temperature are increased by the application of pressurised steam (i.e. gaseous water). In such a process, the apparatus (hereafter known as the steriliser) will have both water steam inlet and condensation outlet facilities. The condensation outlet allows condensed water to be removed. The air within the steriliser prior to use is typically evacuated, preferably by introduction of the pressurised steam. The removal of air aids the process, as the air acts as a barrier to heat transfer and increases the possibility of oxidation of the shea nuts.

The process may be carried out as a continuous, semi-continuous or batch process. Preferably the process is a semi-continuous process, optionally employing apparatus comprising a conveyor belt.

The shea nuts may be held in containers (such as cages) throughout the process. Preferably the cages or containers can hold greater than 50 kg of shea nuts, such as greater than 100 kg, greater than 200 kg or greater than 300 kg, for example greater than 400 kg.

A preferred steriliser is a Resulta horizontal steriliser. Sterilisers such as the Resulta horizontal steriliser are known to be useful for the sterilisation of palm nuts.

Preferably, the total time at a pressure greater than atmospheric pressure during the process is at least 5 minutes, more preferably at least 30 minutes. More preferably, the increased pressure greater than atmospheric pressure is maintained for a total period of time of from 10 minutes to 240 minutes, such as from 30 minutes to 150 minutes. When the process comprises more than one step of heating to greater than atmospheric pressure, it will be appreciated that the total time refers to the time for all of the steps of the process that involve a temperature greater than 100 °C and a pressure greater than atmospheric pressure.

In a preferred process, the period of increased pressure is carried out in conjunction with drainage of the shea nuts. Drainage helps to remove condensed water.

The process of the invention preferably comprises a step of heating to a temperature greater than 100 °C at an absolute pressure of at least 200 kPa. The process of the invention is preferably carried out at an absolute pressure of from 200 kPa to 1,100 kPa.

The process of the invention is preferably carried out at a pressure of from 100 kPa above atmospheric pressure to 1,000 kPa above atmospheric pressure. Even more preferably, the increased pressure is at least 200 kPa greater than atmospheric pressure, such as 280 kPa greater than atmospheric pressure.

For the avoidance of doubt, those skilled in the art understand that the term 'atmospheric pressure' means ambient pressure, and that this will typically be around 100 kPa.

The process of the invention preferably comprises the steps of:
(i) heating at an absolute pressure of from 220 to 275 kPa for from 1 to 20 minutes;
(ii) lowering the pressure to ambient (atmospheric) or slightly above ambient (e.g. to from 100 to 110 kPa);
(iii) heating at an absolute pressure of from 280 to 325 kPa for from 5 to 30 minutes; and
(iv) lowering the pressure to ambient (atmospheric) or slightly above ambient (e.g. to from 100 to 110 kPa).

The process more preferably comprises, following steps (i) to (iv) above:
(v) heating at an absolute pressure of from 350 to 450 kPa for from 5 to 40 minutes; and
(vi) lowering the pressure to 300 to 400 kPa.

Even more preferably the process comprises, following steps (i) to (vi) above:
(vii) heating at an absolute pressure of from 350 to 450 kPa for from 15 to 90 minutes; and
(viii) lowering the pressure to ambient (atmospheric) or slightly above ambient (e.g. to from 100 to 110 kPa).

Preferably, the heating of the shea nuts is carried out in the presence of pressurised steam.

In the process of the invention, the treatment of the shea nuts is preferably carried out at a temperature of from 100 to 300 °C, more preferably from 100 to 250 °C, such as from 100 to 200 °C, even more preferably from 110 to 180 °C, most preferably from 120 to 150 °C.

The skilled person will appreciate that the temperature will typically increase as the pressure is increased.

After sterilisation, the shea nuts may be stored shelled or unshelled. The term 'shelled' means that the shell of the shea nut has been removed to leave the kernel of the shea nut. The term 'unshelled' means that the shell of the shea nut still surrounds the kernel. Preferably, the shea nuts are shelled prior to the extraction of shea butter and prior to the storage of the nuts. The term "shea butter" as used herein is synonymous with the term "shea oil", that is the triglyceride extracted from the shea nut, which primarily contains palmitic, stearic, oleic, linoleic and arachidic acids, mainly stearic and oleic acids.

The process of the invention may further comprise the steps of:
(i) removing the attached pulp from the shea nuts after heating; and
(ii) drying the shea nuts.

Preferably, the shea nuts are dried at least twice in step (ii), preferably at a temperature of from 50 to 300 °C. Preferably, the shea nuts are de-shelled prior to final drying, such as prior to the second period of drying.

The process of the invention may further comprise the step of extracting shea butter from the treated shea nuts. Preferably, the shea butter is extracted from the shea nuts using an expeller. Optionally a solvent may be employed for the further extraction of shea butter.

Preferably the solvent comprises hexane. Methods for extracting shea butter from shea nuts are well known to those skilled in the art.

Shea butter, which is present in a container, in a quantity of greater than 10 kg obtained or obtainable by a process of the invention may preferably comprise less than 5% by weight free fatty acids (FFAs), for example less than 4% by weight free fatty acids, such as less than 3% by weight, less than 2% by weight, or even less than 1% by weight. The shea butter, which is present in a container, may preferably be in a quantity of greater than 20 kg, greater than 30 kg or greater than 40 kg, such as greater than 50 kg, greater than 60 kg, greater than 70 kg, greater than 80 kg, greater than 90 kg, greater than 100 kg, greater than 110 kg or greater than 120 kg. Preferably the container is suitable for the transport and/or storage of the shea butter, such as a plastic container with a re-sealable lid.

Shea butter comprising less than 0.5% by weight free fatty acids (FFAs) obtained by the process of the invention, may preferably contain less than 0.49% by weight free fatty acids, such as less than 0.48% by weight free fatty acids.

The term fatty acid, as used herein, refers to straight chain saturated or unsaturated (including mono-, di- and poly- unsaturated) carboxylic acids having from 8 to 24 carbon atoms.

Shea butter obtained or obtainable by the process of the invention may be used in food products, such as confectionery compositions, including coating compositions and filling compositions, preferably coating compositions. The shea butter may be fractionated, for example to form shea stearin and/or shea olein, preferably shea stearin, prior to use in food products, such as in confectionery compositions.

The confectionery compositions comprising the shea butter or fraction may comprise one or more confectionery additives selected from sugar, cocoa powder, milk powder, yoghurt powder, flavouring and emulsifier. Preferably, the compositions comprise at least sugar and cocoa powder and, optionally, one or more of the other components. Other compositions comprise at least sugar and flavouring and, optionally, one or more of the other components. Additional components such as milk, water, colouring agents and preservatives, more preferably colouring agents and preservatives, may optionally be present in the compositions. Sugar includes sucrose, dextrose and fructose (preferably sucrose). Flavourings include, for example, strawberry, raspberry, vanilla, mint, orange, lemon, lime, coffee and the like. An example of a suitable emulsifier is lecithin. Preferably, the compositions do not contain nut solids (e.g., from peanuts, almonds, hazelnuts, walnuts, cashew nuts, pistachio nuts, macadamia nuts and pecan nuts), such as nut paste.

Typically, confectionery compositions comprising the shea butter or fraction will comprise fat in an amount of from 5 to 70% by weight, more preferably from 10 to 60% by weight, even more preferably from 20 to 50% by weight, such as from 30 to 40% by weight. Additionally or alternatively, compositions may comprise sugar (e.g., sucrose) in an amount of from 10 to 80% by weight, more preferably from 20 to 70% by weight, even more preferably from 30 to 60% by weight. Cocoa powder, when present in the compositions, is preferably present in an amount of from 2 to 20% by weight. Other components, if present, will preferably be present in an amount of from 0.01 to 30% by weight.

One preferred confectionery composition comprising the shea butter or fraction comprises fat in an amount of from 10 to 60% by weight, sugar in an amount of from 20 to 70% by weight, optionally cocoa powder in an amount of from 2 to 20% by weight and optionally from 0.01 to 30% by weight of one or more of milk powder, yoghurt powder, flavouring and emulsifier.

Confectionery compositions comprising the shea butter or fraction may be made by combining one or more confectionery additives selected from sugar, cocoa powder, milk powder, yoghurt powder, flavouring and emulsifier, with the shea butter or fraction. Typically, the components will be mixed at a temperature at which the fat is molten (e.g., at greater than 40°C, such as from 50-80°C).

Confectionery products may be made, for example, by filling an edible substrate with a confectionery composition comprising the shea butter or fraction, according to methods well known in the art. Suitable edible substrates include biscuits, wafers and chocolate shells.

The shea butter, or fraction thereof, that is used in food products, such as confectionery compositions, may optionally be blended with one or more other fats and/or oils such as palm oil and its fractions and one or more liquid oils. Liquid oils are vegetable oils that are liquid at room temperature (20 °C) and include canola oil, soybean oil, sunflower oil, cotton seed oil, ground nut oil, safflower oil and mixtures thereof.

Coating compositions typically comprise sugar. Sugars include, for example, sucrose, glucose, fructose and mixtures thereof. The sugar is typically sucrose. The sugar is preferably powdered.

Preferably, the sugar is present in a coating composition in an amount of from 30 to 70 % by weight, more preferably from 40 to 60 % by weight, even more preferably from 45 to 55 % by weight, based on the weight of the composition.

A coating composition preferably comprises fat in an amount of from 20 to 45 % by weight, such as from 30 to 35 % by weight.

Coating compositions optionally comprise, in addition to the fat and the sugar, one or more components selected from flavourants, emulsifiers and colourants. Typically, these components will be present in an amount of up to 20 % by weight of the composition. Examples of flavourants and colourants include cocoa powder, non-fat dry milk (NFDM) powder and vanillin. Lecithin is a preferred emulsifier and is preferably present in an amount of up to 1 % by weight of the composition, such as from 0.1 to 1 % by weight. It is preferred that the coating composition comprises cocoa powder, more preferably in an amount of up to 15 % by weight of the composition, such as from 1 to 15 % by weight.

Coating compositions are typically used to apply a partial or complete coating to a base product which is preferably a baked product, more preferably a baked confectionery product. A coating will usually be applied to all, or substantially all, of the base product. Baked products are typically baked in an oven. Examples of baked confectionery products include biscuits, cookies and cakes. Cupcakes are particularly preferred examples of baked confectionery products.

Confectionery compositions comprising the shea butter or fraction thereof may also be used as fillings for confectionery products and/or bakery products, wherein the products are adapted to be stored and/or sold and/or consumed at ambient temperature i.e., 10 °C to 30 °C. The products are not generally frozen. The fillings may be applied to substrates such as biscuits, sponges or wafers and may be impregnated into the wafers. The biscuits, sponges or wafers can be present as single layers or in multiple layers with the filling between adjacent layers.

The fillings may be covered with an outer layer of chocolate, either when applied on biscuits, sponges or wafers, or when not so applied. Thus, a preferred confectionery composition comprising shea butter or fraction comprises a chocolate outer layer filled with the composition, optionally comprising a biscuit, sponge or wafer in association with the filling. Typically, the outer layer of chocolate will encapsulate the filling and the biscuit or wafer, if present. The confectionery product may be a bar, optionally divided into segments. The segments may be adapted to allow part of the product to be broken off by the user and consumed separately from the remainder of the product.

In another embodiment, a bakery composition comprises a baked product having a filling comprising a confectionery composition comprising shea butter or fraction. Baked products include bread, cakes, biscuits and sponges. A baked product may comprise a biscuit, sponge or wafer comprising two or more layers of biscuit, sponge or wafer, with the filling between adjacent layers. The bakery product may comprise two layers of biscuit, sponge or wafer with the filling sandwiched between the layers.

The filled confectionery products and the bakery products will generally be packaged, for example in a wrapper, for sale.

Other food products include emulsions such as margarines and spreads, including tub, wrapper and bakery margarines.

Margarines typically comprise from about 80 to 90 % by weight fat as a water-in-oil emulsion. Spreads usually have a lower fat content and include fat continuous or water continuous or bicontinuous spreads and fat reduced spreads.

Spreads and margarines may be formed by mixing a fat blend comprising the shea butter or fraction thereof with an aqueous phase and, typically, an emulsifier. The amounts of fat and aqueous phase typically range from 10-90 % by weight fat and 90-10 % by weight aqueous phase, such as from 20-80 % by weight fat and 80-20 % by weight aqueous phase or from 30-70 % by weight fat and 70-30 % by weight aqueous phase. Further components of margarines and spreads include one or more of colouring agents (such as beta-carotene), flavouring agents (for example, salt and/or citric acid), preservatives (e.g., potassium sorbate) and emulsifiers (such as lecithin or fully hardened vegetable oil); typically, these components are present in an amount of less than 5 % (such as 0.1 to 3 %) by weight of the spread or margarine. The preparation of spreads and margarines from a vegetable fat and an aqueous phase is well-known to those skilled in the art.

An example of a spread or margarine that may be formed comprises from 10 to 90 % by weight fat from 10 to 90 % by weight water and from 0.1 to 10 % by weight of additives including one or more of colouring agents, flavouring agents and emulsifiers.

The shea butter may also be used as a cosmetic, or in a cosmetic formulation, preferably for topical use. Typically, the shea butter or fraction will be present in a cosmetic formulation in an amount of from about 0.01% to about 25% by weight of the cosmetic formulation. The cosmetic formulations preferably comprise one or more of an emulsifier, a surfactant and a perfume, typically in a total amount of from about 1% to about 60% by weight of the cosmetic formulation.

The listing or discussion or discussion of a document in this specification should not necessarily be taken as an acknowledgment that the document is part of the state of the art or is common general knowledge.

Preferences and options for a given feature or parameter of the invention should, unless the context indicates otherwise, be regarded as having been disclosed in combination with any and all preferences and options for all other features or parameters of the invention. Preferred features of the process, for example, the period of time of increased pressure, may be combined in any combination with any other feature, such as the pressure above atmospheric pressure at which the process of the invention is carried out.

Preferred aspects of the invention are illustrated in the following examples. In the examples and throughout this specification, all percentages, parts are ratios are by weight unless indicated otherwise.

### Examples

### Example 1

Three bags of 80 kg of shea fruit (shea nuts including some pulp) were subjected to the treatment shown in Table 1, in a horizontal Resulta steriliser.

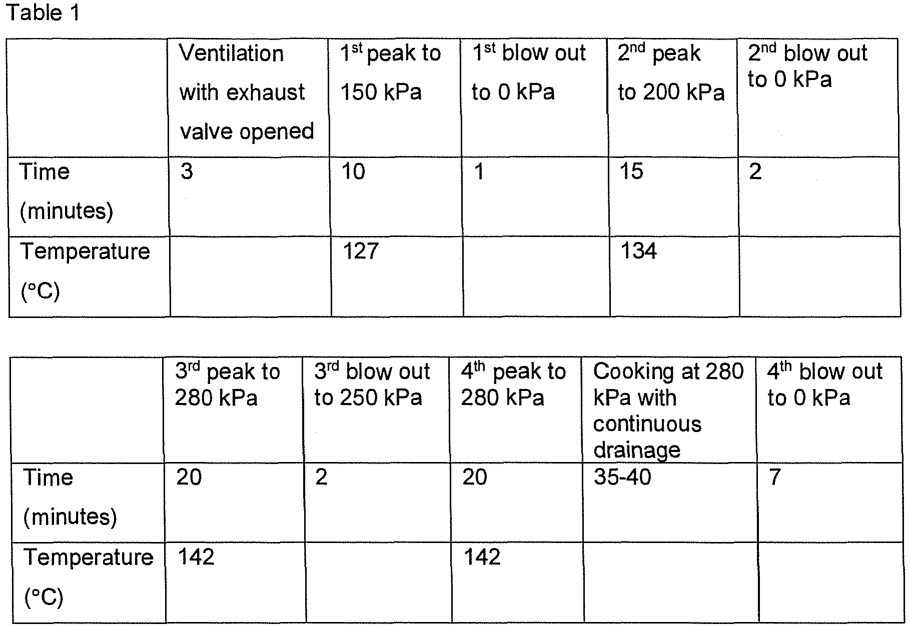

All measurements of pressure are above atmospheric pressure. Sterilization takes place in a sterilization cage with a water steam inlet and an outlet.

### Example 2

Shea fruit were sterilised as described in Example 1. The pulp was removed from the shea nuts one day after the sterilisation to give the kernels with shell. A portion of the nuts were then shelled to give the kernels.

Both shelled and unshelled kernels were directly cracked and extracted with hexane. The resulting shea butter was analysed for quality parameters such as free fatty acid (FFA) content, fat content and moisture content. The results are shown in Table 2.

Batches of shelled and unshelled kernels were also stored for 6 months after sterilisation before they were cracked and extracted with hexane. The shea butter from the shelled and unshelled kernels was then analysed for the quality parameters such as free fatty acid (FFA) content, fat content and moisture content. The results are shown in Table 2.

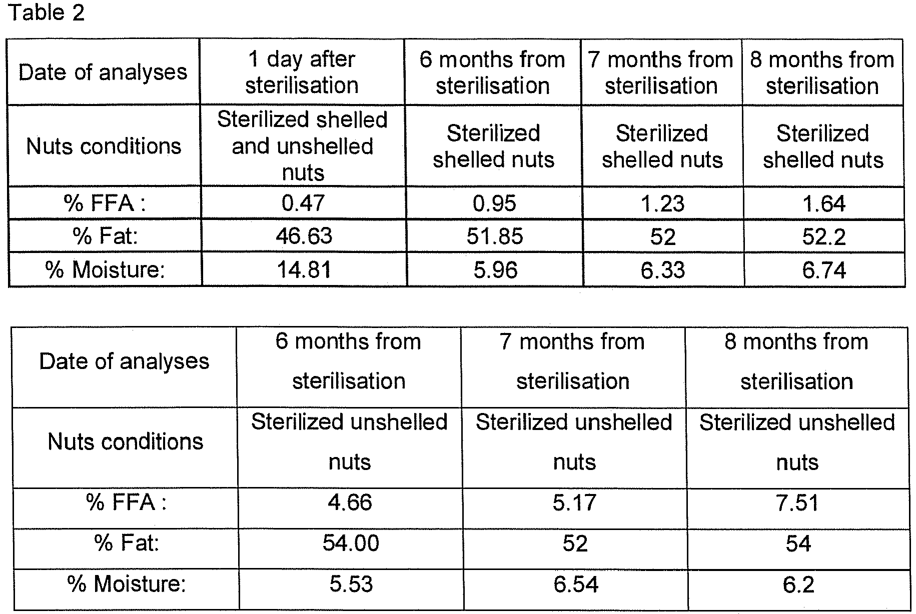

Shea butter obtained by conventional methods over a period of 4 years was analysed to determine the typical percentage of free fatty acids for comparative purposes. The results are shown in Table 3.

**Table 3**

| Season | % FFA (2009/2010) | % FFA (2010/2011) | % FFA (2011/2012) | % FFA (2012/2013) |
|---|---|---|---|---|
| Sep | | 6.40 | 5.66 | 7.05 |
| Oct | 6.44 | 8.16 | 5.93 | 7.21 |
| Nov/Dec | 7.91 | 7.61 | 6.27 | 7.95 |
| Jan/Feb | 8.01 | 7.93 | 6.56 | 7.25 |
| Mar/Apr | 9.48 | 6.51 | 6.94 | 6.94 |

The shea butter produced by the process of invention possesses significantly lower FFA content in comparison to shea butter obtained through conventional methods.

## Claims

1. A process for treating shea nuts which comprises heating shea nuts to a temperature greater than 100 °C at a pressure greater than atmospheric pressure.

2. A process as claimed in Claim 1, wherein the shea nuts comprise pulp.

3. A process as claimed in Claim 1 or 2, which comprises at least two steps of increasing the pressure followed by decreasing the pressure.

4. A process as claimed in any one of the preceding claims, wherein the pressure in the first step is lower than the pressure in the subsequent second step.

5. A process as claimed in any one of the preceding claims, wherein the total time at greater than atmospheric pressure is at least 5 minutes, preferably at least 30 minutes.

6. A process as claimed in any one of the preceding claims, wherein the increased pressure is at least 200 kPa.

7. A process as claimed in any one of the preceding claims, wherein the pressure and temperature are increased by the application of pressurised steam.

8. A process as claimed in any one of the preceding claims, wherein the heating is carried out at a temperature of from 100 to 300 °C, preferably from 100 to 200 °C.

9. A process as claimed in any one of the preceding claims, which is carried out in a steriliser, preferably wherein the air is evacuated from the steriliser before use.

10. A process according to any one of the preceding claims which further comprises the step of extracting shea butter from the treated shea nuts.

11. A process according to Claim 10, wherein the shea butter is extracted from the shea nuts using an expeller.

12. A process according to Claim 10, wherein the shea butter comprises less than 5% by weight free fatty acids (FFAs) and which is present in a container in a quantity of greater than 100 kg.

13. A process according to Claim 10, wherein the shea butter comprises less than 0.5% by weight free fatty acids (FFAs).

14. A process according to Claim 10, wherein the shea butter, or a fraction thereof, is used in a cosmetic, a pharmaceutical or a food product, preferably a food product.

15. Use of a process according to any of the preceding claims for reducing the hydrolysis of triglycerides in FFAs in shea butter.

## Patentansprüche

1. Vorgang zum Behandeln von Sheanüssen, der das Erwärmen von Sheanüssen auf eine Temperatur über 100 °C bei einem Druck über dem Umgebungsdruck umfasst.

2. Vorgang nach Anspruch 1, wobei die Sheanüsse Pulpe umfassen.

3. Vorgang nach Anspruch 1 oder 2, der wenigstens zwei Schritte des Erhöhens des Drucks gefolgt von Verringern des Drucks umfasst.

4. Vorgang nach einem der vorhergehenden Ansprüche, wobei der Druck in dem ersten Schritt niedriger ist als der Druck in dem darauffolgenden zweiten Schritt.

5. Vorgang nach einem der vorhergehenden Ansprüche, wobei die Gesamtzeit bei einem Druck über dem Umgebungsdruck wenigstens 5 Minuten, bevorzugt wenigstens 30 Minuten ist.

6. Vorgang nach einem der vorhergehenden Ansprüche, wobei der erhöhte Druck wenigstens 200 kPa ist.

7. Vorgang nach einem der vorhergehenden Ansprüche, wobei der Druck und die Temperatur durch die Anwendung von Dampfdruck erhöht werden.

8. Vorgang nach einem der vorhergehenden Ansprüche, wobei das Erwärmen bei einer Temperatur von 100 bis 300 °C, bevorzugt von 100 bis 200 °C ausgeführt wird.

9. Vorgang nach einem der vorhergehenden Ansprüche, der in einem Sterilisator ausgeführt wird, wobei die Luft bevorzugt vor der Verwendung aus dem Sterilisator ausgepumpt wird.

10. Vorgang nach einem der vorhergehenden Ansprüche, der ferner den Schritt des Gewinnens von Sheabutter aus den behandelten Sheanüssen umfasst.

11. Vorgang nach Anspruch 10, wobei die Sheabutter von den Sheanüssen unter Verwendung einer Presse gewonnen wird.

12. Vorgang nach Anspruch 10, wobei die Sheabutter weniger als 5 Gew.-% freier Fettsäuren (*free fatty acids* - FFAs) umfasst und in einem Behälter in einer Menge über 100 kg vorhanden ist.

13. Vorgang nach Anspruch 10, wobei die Sheabutter weniger als 0,5 Gew.-% freier Fettsäuren (FFAs) umfasst.

14. Vorgang nach Anspruch 10, wobei die Sheabutter oder ein Teil davon in einem kosmetischen, einem pharmazeutischen oder einem Nahrungsmittelerzeugnis, bevorzugt in einem Nahrungsmittelerzeugnis verwendet wird.

15. Verwendung eines Vorgangs nach einem der vorhergehenden Ansprüche zum Verringern der Hydrolyse von Triglyceriden in FFAs in Sheabutter.

## Revendications

1. Procédé de traitement de noix de karité qui comprend le chauffage de noix de karité à une température plus grande que 100 °C à une pression plus grande que la pression atmosphérique.

2. Procédé selon la revendication 1, dans lequel les noix de karité comprennent de la pulpe.

3. Procédé selon la revendication 1 ou 2, qui comprend au moins deux étapes d'augmentation de la pression suivie par une diminution de la pression.

4. Procédé selon l'une quelconque des revendications précédentes, dans lequel la pression dans la première étape est plus basse que la pression dans la seconde étape ultérieure.

5. Procédé selon l'une quelconque des revendications précédentes, dans lequel le temps total à plus que la pression atmosphérique est d'au moins 5 minutes, de préférence d'au moins 30 minutes.

6. Procédé selon l'une quelconque des revendications précédentes, dans lequel la pression augmentée est d'au moins 200 kPa.

7. Procédé selon l'une quelconque des revendications précédentes, dans lequel la pression et la température sont augmentées par l'application d'une vapeur pressurisée.

8. Procédé selon l'une quelconque des revendications précédentes, dans lequel le chauffage est effectué à une température de 100 à 300 °C, de préférence de 100 à 200 °C.

9. Procédé selon l'une quelconque des revendications précédentes, qui est effectué dans un stérilisateur, de préférence dans lequel l'air est évacué du stérilisateur avant utilisation.

10. Procédé selon l'une quelconque des revendications précédentes, qui comprend en outre l'étape d'extraction de beurre de karité à partir des noix de karité traitées.

11. Procédé selon la revendication 10, dans lequel le beurre de karité est extrait des noix de karité à l'aide d'un expeller.

12. Procédé selon la revendication 10, dans lequel le beurre de karité comprend moins de 5 % en poids d'acides gras libres (FFA) et qui est présent dans un contenant à hauteur de plus de 100 kg.

13. Procédé selon la revendication 10, dans lequel le beurre de karité comprend moins de 0,5 % en poids d'acides gras libres (FFA).

14. Procédé selon la revendication 10, dans lequel le beurre de karité, ou une fraction de celui-ci, est utilisé dans un produit cosmétique, pharmaceutique ou alimentaire, de préférence un produit alimentaire.

15. Utilisation d'un procédé selon l'une quelconque des revendications précédentes, en vue de réduire l'hydrolyse des triglycérides dans des FFA contenus dans du beurre de karité.
